# EUROPEAN PATENT SPECIFICATION

(11) **EP 2 355 985 B1**
(45) Date of publication and mention of the grant of the patent: **17.10.2012**
(21) Application number: 09753257.6
(22) Date of filing: 28.10.2009
(51) Int. Cl.: B60C 9/00, D02G 3/04, D02G 3/44

(54) **TIRE SIDE-WALL CUT RESISTANT KNITTED TEXTILE FABRIC, TIRE CONTAINING SAID FABRIC AND PROCESSES FOR MAKING THE SAME**
SCHNITTFESTES GEWIRKTES TEXTILGEWEBE FÜR EINE REIFENSEITENWAND, DAS GEWEBE ENTHALTENDE SEITENWAND UND HERSTELLUNGSVERFAHREN DAFÜR
TISSU TEXTILE TRICOTÉ, RÉSISTANT À LA DÉCOUPE, POUR PAROI LATÉRALE DE PNEU, PNEU CONTENANT LEDIT TISSU ET PROCÉDÉS POUR LEUR FABRICATION

(30) Priority: 30.10.2008 US 261674
(43) Date of publication of application: 17.08.2011
(73) Proprietor: E. I. du Pont de Nemours and Company, Wilmington, DE 19898 (US); The Goodyear Tire & Rubber Company, Akron, OH 44316-0001 (US)
(72) Inventor: LAMONTIA, Mark, Allan, Landenberg Pennsylvania 19350 (US); PRICKETT, Larry, John, Chesterfield Virginia 23838 (US); ONBILGER, Derya, Gulsen, Midlothian Virginia 23112 (US); WESTGATE, Walter Kevin, Uniontown, Ohio, 44685 (US); TWEEDIE, Judith, Anne, Uniontown, Ohio 44685 (US)
(74) Representative: Heinemann, Monica
(86) International application number: PCT/US2009/062272
(87) International publication number: WO 2010/056515

(56) References cited:
- EP-A- 0 392 117
- WO-A-01/98572
- WO-A-97/27769
- WO-A-2005/042816
- WO-A-2008/073803

## Description

### BACKGROUND OF INVENTION

### 1. Field of the Invention.

This invention relates to a non-load bearing cut-resistant component for use in the side walls of a tire and tires including the same. The component is made from a knitted textile fabric comprising at least one yarn having cut resistant polymeric fiber and at least one second yarn having inorganic fiber; the knitted fabric further has a coating for good adhesion of the fabric to rubber such that the cut-resistant tire side-wall component has a free area of from 18 to 65 percent.

### 2. Description of Related Art.

Tire cut resistance is an important attribute, particularly when the tire is designed for off-the-road use, such as in the case of radial light truck tires and tires for SUVs (called RLT tires). In particular, the sidewalls of tires can be cut or slashed by a variety of threats.

High tenacity aramid filaments in the form of cords have been incorporated into sidewalls of tires as mechanical reinforcement, acting as load-bearing structures within the sidewalls of the tire by attachment to the beads of the tire. Generally these aramid filaments have been present in the form of continuous filaments so as to provide strong mechanical properties. There are many references that disclose the use of combinations of various continuous filaments, including aramid continuous filaments, with metal wires or other inorganic continuous filaments in load bearing applications in tires.

United States Patent No. 6,691,757 discloses a radial tire having two side-cut shields, one each disposed in each sidewall of the tire, the side-cut shields comprising at least two plies of arrays of parallel filaments, with each parallel array disposed at an angle to the adjacent array. The filaments in the filament arrays can be an organic or inorganic material, such as steel, polyamide, aromatic polyamide, or rayon. This type of reinforcement requires a substantial amount of material in the tire side wall because a single ply layer of material cannot provide multi-axial cut protection.

International Patent Application Publication WO 2007/048683 discloses bi-elastic reinforcement of tires that can be a knitted fabric. The fabric can be constituted by synthetic fibers, natural fibers or a mixture of these fibers. The elastic knitted fabric has a void fraction of at least 40% in order that the knitted fabric can be sufficiently compressed. The void fraction is calculated by comparing the volumetric mass of the knitted fabric with that of compacted material measured by any classic means. The use of bi-elastic reinforcement improves the resistance to the propagation of cracks.

None of these references deal with the use in a tire side wall of a fabric containing the combination of cut resistant polymeric fiber and inorganic fiber wherein improved cut resistance of the tire is the primary attribute and load bearing is not a major consideration.

Fabrics used in tires generally have been made from heavy cords; references that do disclose fabrics either rely on positioning of the fabrics in certain layers in the tread of the tire or the use of very "tight" fabrics or those that have high surface cover factors to provide puncture resistance.

For example, United States Patent No. 4,649,979 to Kazusa et al. discloses a bicycle tire having a plurality of carcass plies and a breaker ply intermediate those plies under the tread. The breaker ply can be composed of various materials of high strength and improves the cutting and puncture of the tire. The breaker is usually formed from a fabric made of aromatic polyamide, high strength nylon, polyester, vinylon, rayon or glass fibers, or metallic materials such as a wire net or a plurality of steel wires.

Research Disclosure 42159 (May 1999), discloses the use of penetration-resistant woven material, specifically tightly woven p-oriented aromatic polyamide fabrics, as sleeves for tires to reduce or eliminate punctures. Document WO97/27769 discloses a tire side-wall component according to the preamble of claim 1.

United States Patent Nos. 6,534,175 to Zhu and Prickett and 6,952915 to Prickett disclose comfortable cut resistant fabrics to be used in protective clothing. Such fabrics are designed to essentially provide protection of human skin and are made from at least one cut resistant yarn comprising a strand having a sheath of cut resistant staple fibers and a metal fiber core plied with a strand comprising cut resistant fibers free of metal fibers. However, because of the weak nature of staple fibers, they have not been thought to be acceptable in tire components. Yarn tenacity is reduced when a continuous filament yarn is replaced with a staple spun yarn, so in a typical application the staple yarn mass and the basis weight of any fabrics made from such staple yarns would have to be increased to such a degree so as to make application of such large yarns, cords, or fabrics impractical. Further, it is not clear that such fabrics, designed to protect human skin, have adequate open area to allow adequate penetration of rubber compounds during tire manufacture.

What is needed therefore is a method of providing improved cut protection to a tire, particularly in the sidewall area, that provides multi-directional cut protection in the sidewall with one layer of material, and is not dependent on the material being a load-bearing structure.

### BRIEF SUMMARY OF THE INVENTION

This invention relates to a cut resistant tire side-wall component, and a tire containing such component, the side-wall component comprising a textile fabric wherein a single layer of said fabric provides multi-directional cut resistance in the plane of the fabric, the fabric comprising at least one yarn having cut-resistant polymeric fiber and at least one yarn having inorganic fiber, the fabric further having a coating for improved adhesion of the fabric to rubber such that the cut resistant tire side-wall component has a free area of from 18 to 65 percent.

This invention also relates to a process for making a cut-resistant tire side-wall component, comprising
a) providing a first yarn having cut resistant polymeric fiber and a second yarn comprising inorganic fiber;
b) knitting the first and second yarns into a fabric having a free area of from 18 to 65 percent; and
c) applying a coating on the fabric for improved adhesion of the fabric to rubber, while maintaining the free area of the tire side-wall component of from 18 to 65 percent.

### BRIEF DESCRIPTION OF THE DRAWINGS

Figures 1 to 4 are illustrations of various embodiments of cut-resistant tire side-wall components in a tire.
Figure 5 is a digital image of a fabric useful in cut-resistant tire side-wall components.
Figure 6 illustrates some preferred embodiments of the fabric used in the cut resistant tire side-wall component.
Figure 7 is a representation of one single yarn comprising a sheath of cut resistant polymeric staple fibers and a core inorganic filament.
Figure 8 is a representation of a ply-twisted yarn comprising two singles yarns.

### DETAILED DESCRIPTION OF THE INVENTION

### Tire Side-wall Components

This invention relates to a cut resistant tire side-wall component comprising a textile fabric comprising at least one yarn having cut-resistant polymeric fibers and one yarn having an inorganic fiber. By "tire side-wall component" is meant a material that can be used in the side walls of tires; that is, the area between the bead of the tire and the tread. Generally this is a strip of textile fabric impregnated with rubber material that is inserted into the tire side wall but not attached to the bead; or a protective envelope of rubber impregnated textile fabric positioned from one bead on one side of the tire across the crown of the tire to the bead on the other side of the tire but not attached to either bead. "Bead" means that part of the tire comprising an annular tensile member wrapped by ply cords and shaped, with or without other reinforcement elements such as flippers, chippers, apexes, toe guards and chafers, to fit the wheel rim. "Tread" means that portion of a tire that comes into contact with the road when the tire is normally inflated and under normal load. "Crown" means that portion of the tire within the width limits of the tire tread. "Carcass" means the tire structure apart from the belt structure, tread, undertread, and sidewall rubber over the plies, but including the beads.

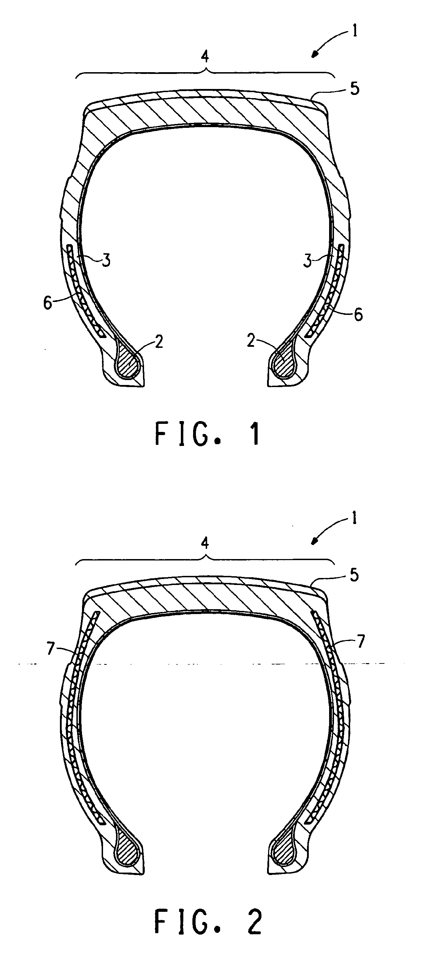

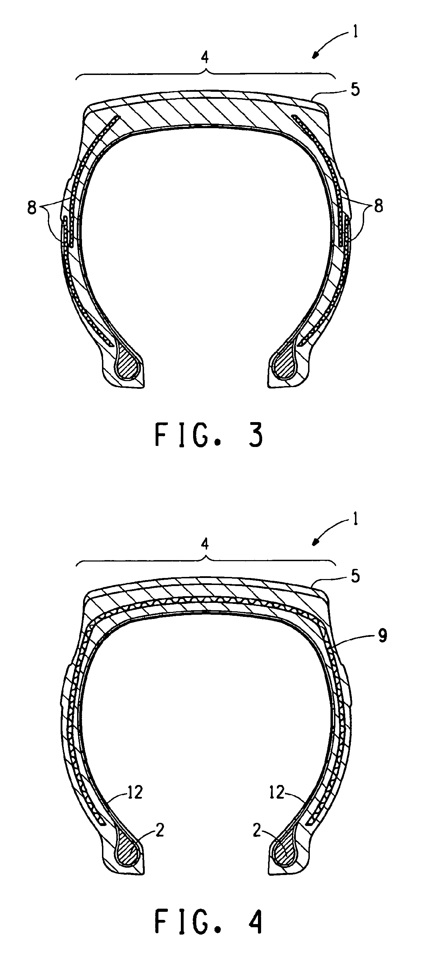

As shown in Figure 1, a tire 1 typically has two beads 2, two sidewalls 3, a crown area 4, and a thread area 5 forming the outer surface of the crown area. One embodiment of the cut-resistant tire side-wall components 6 are shown butting up to but not wrapping the beads 2. Figure 2 shows another embodiment of the tire having cut-resistant tire side-wall components 7 that encompass the entire side walls of the tire from the bead on either side to generally the edge of the crown on either side of the tire. Figure 3 shows yet another embodiment of multiple cut-resistant tire side-wall components 8; these are illustrated as overlapping but they could be shown abutting each other in the side wall. Figure 4 shows yet another embodiment of the cut-resistant tire side-wall component in the form of a protective envelope 9 extending from, but not wrapped around, one bead on one side of the tire to the other bead on the other side of the tire, across the crown area of the tire. The particular shape of the tire carcass, tread, beads, etc. shown in the figures is for illustration and is not intended to be limiting; for example, the tire could have a higher or lower profile.

This invention relates to a cut-resistant tire side-wall component that is non-load bearing. The inflated carcass of the tire must support the weight of the car on the road surface. Load-bearing components efficiently mechanically transfer the load on the bead of the tire to the tread while retaining the lateral load in the inflated tire. Such load-bearing components provide such efficient mechanical transfer of the load by being attached to the bead of the tire; that is, by being wrapped around and stabilized to the bead during the manufacture of the tire. For example, in Figure 4, each of the ends of load-bearing carcass ply 12 wraps around respective tire beads 2 on either side of the tire in the sidewall to form a load-bearing structure. By "non-load bearing" is meant the tire side-wall component is not attached to the bead; that is, it is not wrapped around the bead during manufacture as are conventional radial plies or other carcass components and therefore the cut resistant tire side wall component does not efficiently transfer the load on the bead to the tread or retain lateral loads in the inflated tire. Because this cut-resistant tire component is not load bearing, it can be efficiently designed to provide advanced cut protection with a single fabric layer or ply.

The amount of area in the tire side wall covered by the cut resistant side-wall component can vary as desired; the component can cover the full area of the side wall or a portion of the area. While multiple side-wall components can be utilized in the side walls of tires, and they can overlap or not as desired, in a preferred embodiment the cut resistant tire side wall component uses only a single layer or ply of fabric. In fact the tire side wall component provides multi-directional cut resistance in the plane of the fabric or in the tire side wall with a single layer or ply of fabric, thereby reducing the number of cut-resistant side wall components needed in the tire.

The side-wall components are built into the side walls of the tires and are impregnated with tire rubber during the manufacture of the tires. Generally both side walls of the tires will contain cut resistant side-wall components. If desired, one side-wall component piece can be used to cover both side walls. For example, one side-wall component piece can be incorporated into a first side wall area extending from the first bead area to the first edge of the tread area, with the piece being shaped such that is extends across the tread area to the second edge of the tread area, and further across the second opposing sidewall area to the second bead area. In this fashion, the side-wall component is somewhat like a carcass ply incorporated from one bead to the other opposing bead in the tire; however, the side-wall component is not wrapped around and stabilized to the bead so efficient load bearing is not achieved by this type of ply.

### Cut-Resistant Fabrics

The textile fabric used in the tire side-wall component is a knitted fabric. "Knitted" is meant to include a structure producible by interlocking a series of loops of one or more yarns by means of needles or wires, such as warp knits (e.g., tricot, milanese, or raschel) and weft knits (e.g., circular or flat). It is thought the knit structure provides increased mobility for the yarns in the fabric during the manufacture of tires, allowing for improved fabric flexibility and expansion. Cut resistance and flexibility are affected by tightness of the knit and that tightness can be adjusted to meet any specific need. A very effective combination of cut resistance and flexibility has been found in, for example, single jersey knits, but other knits, including terry, rib, or other knits could be used.

Cut resistant fabrics can be made from one or multiple single yarns, one or multiple ply twisted yarns, and/or combinations thereof. Singles yarns are preferred to reduce manufacturing costs, provided that their characteristic twist liveliness does not cause fabric distortion of the knitted fabric. Ply twisted yarns are twist balanced to eliminate yarn liveliness and used for applications where singles yarns will not work.

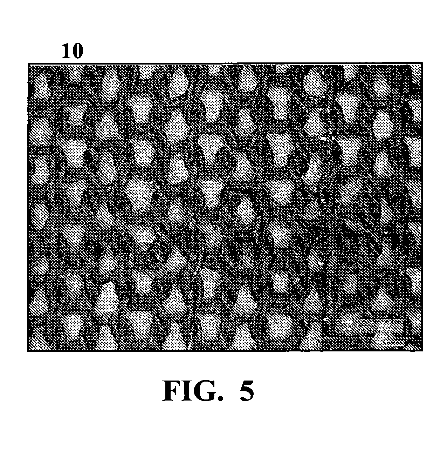

In one embodiment, the textile fabric and the side-wall component have a free area of from 18 to 65 percent. "Free area" is a measure of the openness of the fabric and is the amount of area in the fabric plane that is not covered by yarns. It is a visual measurement of the tightness of the fabric and is determined by taking an electronic image of the light from a light table passing through a six-inch by six-inch square sample of the fabric and comparing the intensity of the measured light to the intensity of white pixels. In some preferred embodiments the fabric and side-wall component have a free area of from 25 to 65 percent and in some embodiments 30 to 65 percent, while in some preferred embodiments the free area of the fabric and tire side-wall component is from 40 to 65 percent. This openness of the fabric provides adequate space for the tire rubber to fully impregnate the side-wall component. Figure 5 is a digital image of one useful knit fabric 10 having 55 percent free area.

In some preferred embodiments, the number of wales in the knitted fabric is not equal to the number of courses. In some especially preferred embodiments, the number of wales is less than the number of courses, creating a very open knitted structure. In some preferred embodiments, the knitted fabric has 4 to 7 wales per inch (16 to 28 wales/decimeter) and 7 to 17 courses per inch (28 to 67 courses/decimeter). In other embodiments the knitted fabric has 4 to 12 wales per inch (16 to 63 wales/decimeter) and 7 to 17 courses per inch (28 to 67 courses/decimeter).

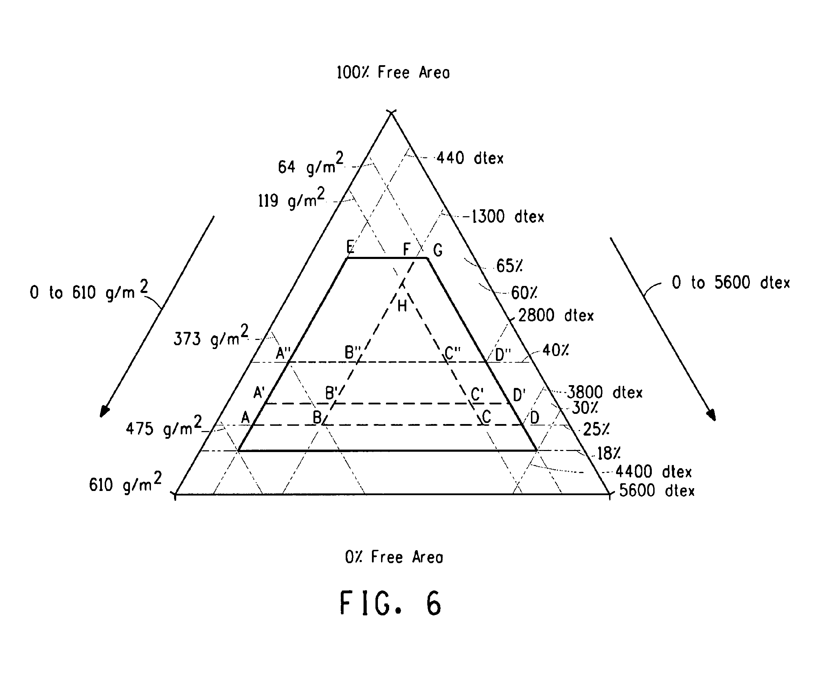

Figure 6 illustrates the properties of some embodiments of the cut resistant tire side-wall component. The triangular chart has on the first axis basis weight of the textile fabric from 0 to 18 ounces per square yard (610 grams per square meter), on the second axis yarn linear density from 0 to 5000 denier (0 to 5600 dtex), and on the third axis free area from 0 to 100%. In some embodiments, textile fabrics have a basis weight of from 1.9 to 14 oz/yd² (64 to 475 g/m²), preferably 1.9 to 11 oz/yd² (64 to 373 g/m²), and most preferably 3.5 to 11 oz/yd² (119 to 373 g/m²), the fabrics at the high end of the basis weight range providing more cut protection. In some embodiments, the yarns in the fabrics have a linear density of 400 to 4000 denier (440 to 4400 dtex), preferably 1200 to 3400 denier (1300 to 3800 dtex), and most preferably 1200 to 3000 denier (1300 to 3300 dtex). As used herein, these ranges of yarn linear density refer to the total linear density of an end or a thread used as a unit in the fabric, with the end or thread being either one or more single yarns, one or more single or plied yarns co-fed to a knitting machine, one or more plied yarns, and/or combinations of these yarns.

Figure 6 shows some preferred fabric structures with the Area **A-D-G-E** being an embodiment of preferred fabric properties. Alternate embodiments illustrating preferred free area operating ranges are represented by lines **A-D** for 25% free area, **A'-D'** for 30% free area, and **A"-D"** for 40% free area. One preferred combination of properties is the area designated by the letters **B-F-G-D,** which would describe a textile fabric having a free area of 25 to 65% made from 1200 to 3400 denier (1300 to 3800 dtex) yarns, and having a basis weight of 1.9 to 11 ounces per square yard (64 to 373 g/m²). Another preferred combination of properties is the area designated by the letters **B-C-H**, representing 1200 to 3000 denier (1300 to 3300 dtex) yarns, 25 to 60 % free space, and a basis weight of 3.5 to 11 ounces per square yard (119 to 373 g/m²). Other preferred combinations can be generated by substituting the **A-D, B-D,** or **B-C** boundary with the appropriate **A'-D'** or **A"-D"** lines (or likewise **B'-D"** or **B"-D"** or **B'-C'** or **B"-C"**) representing different free area boundaries.

If more than 65% free area is present in the textile fabric, it is believed the cut resistance of the material suffers because there simply is not enough fabric available to retard a cut. If less than 18% free area is present, it is believed that adequate rubber penetration through the fabric will not be attained, causing tire manufacturing and operational problems. If yarns having a linear density of more than 3400 denier (3800 dtex) or basis weights in excess of 14 ounces per square yard (475 g/m²) are used, the fabrics become too bulky to be practically useful as tire side-wall components; while if yarns having a linear density of less that 400 denier (440 dtex) or fabrics having a basis weight of less than 1.9 ounces per square yard (64 g/m²) are used, it is believed cut resistance will be significantly reduced.

### Coating

The textile fabric having a free area of from 18 to 65 percent further has a coating for good adhesion of the fabric to rubber. After the coating is applied to the textile fabric, the resulting coated fabric retains a free area of from 18 to 65 percent and forms the cut resistant side-wall component. As in the fabric without coating, some preferred embodiments the fabric after coating has a free area of from 25 to 65 percent and in some embodiments 30 to 65 percent, while in some preferred embodiments the fabric after coating has a free area of from 40 to 65 percent. In a preferred embodiment, the coating comprises an epoxy resin subcoat and a resorcinol-formaldehyde topcoat.

The coating is a polymeric material designed to increase the adhesion of the fabric to the rubber matrix. Generally the coating is the same as can be used as for dipped tire cords. The coating can be selected from epoxies, isocyanates, and various resorcinol-formaldehyde latex mixtures.

### Cut-Resistant Polymeric Fiber Yarns

The knitted textile fabric comprises at least one single yarn having organic cut-resistant fiber. By "yarn" is meant an assemblage of staple fibers spun or twisted together to form a continuous strand, an assemblage of one or more continuous filaments that form a continuous strand, or some mixture of staple fibers and one or more continuous filaments. Yarn made with a plurality of continuous filaments is known as continuous multifilament yarn. In many embodiments, "yarn" refers to what is known in the art as a singles yarn, which is the simplest strand of textile material suitable for knitting. A spun staple yarn can be formed from staple fibers with more or less twist; a continuous multifilament yarn can be formed with or without twist. When twist is present in a singles yam, it is all in the same direction. If desired, a singles yarn can have only staple fibers or can have only continuous filaments, or can have a mixture of staple fibers and continuous filaments.

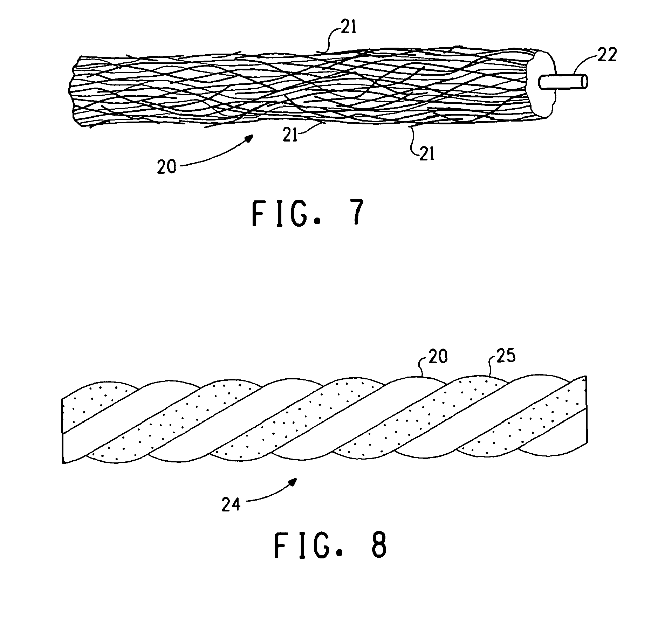

Continuous filament and staple fiber can be present in the yarn, for example, in the form of a sheath/core yarn as in Figure 7 as yarn **20**. The organic cut resistant staple fiber sheath **21** can be wrapped, spun or fasciated around a continuous filament core **22**. These can be achieved by means such as core-spun spinning such as DREF spinning or any method of core insertion of the inorganic material using ring spinning; airjet spinning with standard Murata or Murata Vortex jet-like spinning; open-end spinning, and the like. If desired, the staple fiber is consolidated around the inorganic filament core at a density sufficient to cover the core. The degree of coverage depends on the process used to spin the yarn; for example, core-spun spinning such as DREF spinning (disclosed, for example, in U.S. Patent Nos. 4,107,909; 4,249,368; & 4,327,545) provides better coverage than other spinning processes. Other spinning processes can generally provide only partial coverage of the core but even partial coverage is assumed a sheath/core structure for the purposes of this invention. The sheath can also include some fibers of other materials to the extent that decreased cut resistance, due to that other material, can be tolerated.

Alternatively, continuous filament and staple fiber can be combined in a yarn using ring spinning, forming a yarn as in Figure 9. Ring-spun single yarn 26 is shown having at least one continuous filament 27 and a partially covering ring-spun sheath 28 of staple fiber. Ring spinning provides only partial coverage of the center core but even partial coverage is assumed a sheath/core structure for the purposes of this invention. The yarn can also include some fibers of other materials to the extent that decreased cut resistance, due to that other material, can be tolerated.

Alternatively, the single yarn can be a wrapped yarn, having one or more core yarns that are spirally wrapped by at least one other yarn. These yarns can be used to fully or partially wrap the core yarn with another yarn. Dense spiral wrappings or multiple wrappings can cover practically the entire core yarn.

If the yarn containing organic cut-resistant fiber is a sheath/core fiber, either the sheath or the core, or both can contain the organic cut-resistant fiber. The single yarns having an inorganic filament core and an organic cut resistant staple fiber sheath are generally 20 to 70 weight percent inorganic with a total linear density of 400 to 2800 dtex. In some embodiments, the ratio of material in the sheath to the core, on a weight basis, is preferably from 75/25 to 40/60.

In some embodiments, the organic cut-resistant staple fibers preferably used in this invention have a length of preferably 2 to 20 centimeters, preferably 3.5 to 6 centimeters. In some preferred embodiments they have a diameter of 10 to 35 micrometers and a linear density of 0.5 to 7 dtex.

In some preferred embodiments the organic cut resistant staple fibers have a cut index of at least 0.8 and preferably a cut index of 1.2 or greater. The most preferred staple fibers have a cut index of 1.5 or greater. The cut index is the cut performance of a 475 grams/square meter (14 ounces/square yard) fabric woven or knitted from 100% of the fiber to be tested, that is then measured by ASTM F1790-97 (measured in grams, also known as the Cut Protection Performance (CPP)) divided by the areal density (in grams per square meter) of the fabric being cut. For example fibers of poly(p-phenylene terephthalamide) can have a CPP of 1050 g and a cut index of 2.2 g/g/m²; fibers of ultra-high molecular weight polyethylene can have a CPP of 900 g and a cut index of 1.9 g/g/m²; and nylon and polyester fibers can have a CPP of 650 g and a cut index of 1.4 g/g/m².

### Inorganic Fiber Yarns

The knitted textile fabric comprises at least one single yarn having inorganic fiber. The inorganic fiber can be a single continuous filament or in some embodiments the inorganic filament core may be multifilament. In some preferred embodiments it is preferably a single metal filament or several metal or glass filaments, as needed or desired for a particular situation.

By "metal filament" is meant filament or wire made from a ductile metal such as stainless steel, copper, aluminum, bronze, and the like. If desired these metal filaments can be coated to improve adhesion in rubber. An example is a steel filament coated with brass. The metal filaments are generally continuous wires. In some embodiments useful metal filaments are 50 to 200 micrometers in diameter, and are preferably 75 to 150 micrometers in diameter. For convenience, the Core Size Conversion Table lists the relationship between steel diameters and equivalent linear density.

### Steel Core Size Conversion Table

| Mil | Micron | Denier | dTex | Tex |
|---|---|---|---|---|
| 2 | 50 | 130 | 144 | 14 |
| 3 | 75 | 293 | 325 | 33 |
| 4 | 100 | 520 | 578 | 58 |
| 4.5 | 113 | 658 | 731 | 73 |
| 5 | 125 | 813 | 903 | 90 |
| 5.5 | 138 | 983 | 1092 | 109 |
| 6 | 150 | 1170 | 1300 | 130 |
| 7 | 175 | 1593 | 1769 | 177 |
| 8 | 200 | 2080 | 2304 | 230 |

By "glass filament" is meant continuous multi-filament yarn formed from silica-based formulations. These formulations include E-glass, S-glass, C-glass, D-glass, A-glass and the like. In some embodiments useful glass filaments are 1 to 25 micrometers in diameter, and are preferably 3 to 15 micrometers in diameter. In some embodiments useful multi-filament yarns have a linear density of from 110 to 2800 dtex.

In some embodiments, the inorganic fiber can be incorporated into a yarn having both continuous filament and staple fiber, for example, in the form of a sheath/core yarn as previously described and shown in Figures 7 and 9. In some preferred embodiments, the inorganic fiber is incorporated into the core of such yarns. In some other embodiments, the inorganic fiber can be incorporated into the sheath.

### Ply-Twisted Yarns

The yarn having cut-resistant polymer fiber and the yarn having inorganic fiber in the knitted textile fabric can be present in the form of a ply-twisted yarn, if desired. As use herein the phrases "ply-twisted yarn" and "plied yarn" can be used interchangeably and refer to two or more yarns, i.e., singles yarns, twisted or plied together. It is well known in the art to twist single yarns (also commonly known, when used with staple yarns, as "singles" yarns) together to make ply-twisted yarns. By the phrase "twisting together at least two individual single yarns" is meant the two single yarns are twisted together without one yarn fully covering the other. This distinguishes ply-twisted yarns from covered or wrapped yarns where a first single yarn is completely wrapped around a second single yarn so that the surface of the resulting yarn only exposes the first single yarn. Figure 8 illustrates ply-twisted yarn 24 made from singles yarn 30 containing cut-resistant organic polymer fiber and singles yarn 33 containing inorganic fiber. It is not intended that the figure be limiting on the size of the filaments, particularly the inorganic fiber yarn, which in many cases will be significantly smaller than the overall single yarn. The single yarns may have additional twist, which is not shown in figures for the purposed of clarity. In some embodiments, the ply-twisted yarns include at least two different single yarns. The ply-twisted yarns can include other materials as long as the function or performance of the yarn or fabric made from that yarn is not compromised for the desired use.

Ply-twisted yarns can be made from single yarns using either a two-step or combined process. In the first step of the two-step process, two or more single yarns are combined parallel to one another with no ply twist and wound onto a package. In the next step, the two or more combined yarns are then ring twisted around each another (or together) with the reverse twist of the single yarns to form a ply-twisted yarn. Ply-twisted yarns normally have "Z" twist (single yarns normally have "S" twist). Alternatively, a combined process can be employed to ply twist the singled yarns, which combines both of these steps in one operation.

The ply-twisting is accomplished by twisting the single yarns into ply-twisted yarns having a Tex system twist multiplier of from 14.4. to 33.6, preferably 19.2 to 31.2. (Equivalent to a cotton count twist multiplier of from 1.5 to 3.5, preferably 2.0 to 3.25). Twist multiplier is well known in the art and is the ratio of turns per inch to the square root of the yarn count. The ply-twisted yarns may then be combined with other same or different ply-twisted yarns, or other filaments or yarns to form a cord, or to form a yarn bundle to form a fabric, or the individual ply-twisted yarns can be used to form the fabric, depending on the desired fabric requirements.

In some embodiments, one or more ply-twisted yams are combined into a bundle of yarns for knitting cut resistant fabrics. Fabric properties can be changed by the addition of other single yarns made from staple fibers that do not contain inorganic filaments into the ply-twisted yarns or into the bundle of yarns. Preferably, these single yarns contain organic cut resistant fiber. Such single yarns generally have a linear density of 400 to 2800 dtex.

In one preferred embodiment two identical staple fiber sheath/inorganic core single yarns are ply-twisted together to form a ply-twisted yarn. Depending on the application and the size of the singles yarn, the ply-twisted yarn can be used as is or combined with other ply-twisted yarns. For example, a single, heavy ply-twisted yarn using two 6 mil steel ends as the cores for the singles yarns can be used without further combination with other yarns. Alternatively, two lighter weight ply-twisted yarns can be combined together to form a bundle (having four single yarns total), that can be fed to a knitting machine with or without further twisting the ply-twisted yarns together. Alternatively, a yarn bundle can be made containing a ply-twisted yarn made from two staple fiber sheath/inorganic core singles yarns combined with a ply-twisted yarn made from two single yarns of fiber, preferably cut-resistant staple fiber that does not have any inorganic filaments. These alternatives are not intended to be limiting and more than two ply-twisted yarns can be used in a yarn bundle. Many combinations are possible, depending on the number of ply-twisted yarns desired in the yarn bundle and the amount of cut protection is desired.

The single yarns, whether including an inorganic filament or not, can have some twist. The ply-twisted yarns, also, can have some twist and the twist in the ply-twisted yarn is generally opposite the twist in the single yarns. In any of the single yarns twist is generally in the range of 19.1 to 38.2 Tex system twist multiplier (2 to 4 cotton count twist multiplier). The knit fabric can be made from a feed of one or a multiple of single or ply-twisted yarns and the yarn bundle fed to the machine need not have twist, although twist can be put into the bundle if desired.

It is believed the preferred cut-resistant singles yarn containing steel in many embodiments is a singles yarn having a 3 to 6 mil (0.076 to 0.152 mm) steel core with a sheath/core weight ratio of about 50/50. For example, 5-mil (0.125 mm) steel has a denier of about 850 denier (935 dtex) and at 50/50 ratio would mean the final singles yarn would have be about 1700 denier (1900 dtex). Plying two ends of this example singles yarn would result in a final ply-twisted yarn that was about 3.1/2s cc (3800 dtex).

It is believed the preferred cut-resistant singles yarn containing fiberglass in many embodiments is a singles yam having a 400 to 800 denier (440 to 890 dtex) fiberglass core with a sheath/core weight ratio of about 50/50. For example 600 denier (680 dtex) fiberglass at a 50/50 ratio would mean the final singles yarn would be about 1200 denier (1300 dtex). Plying two ends of this example singles yarn would result in a final ply-twisted yarn that was about 4.3/2s cc (2700 dtex).

### Cut- Resistant Fibers

The preferred cut-resistant staple fibers are para-aramid fibers. By para-aramid fibers is meant fibers made from para-aramid polymers; poly(p-phenylene terephthalamide) (PPD-T) is the preferred para-aramid polymer. By PPD-T is meant the homopolymer resulting from mole-for-mole polymerization of p-phenylene diamine and terephthaloyl chloride and, also, copolymers resulting from incorporation of small amounts of other diamines with the p-phenylene diamine and of small amounts of other diacid chlorides with the terephthaloyl chloride. As a general rule, other diamines and other diacid chlorides can be used in amounts up to as much as about 10 mole percent of the p-phenylene diamine or the terephthaloyl chloride, or perhaps slightly higher, provided only that the other diamines and diacid chlorides have no reactive groups which interfere with the polymerization reaction. PPD-T, also, means copolymers resulting from incorporation of other aromatic diamines and other aromatic diacid chlorides such as, for example, 2,6-naphthaloyl chloride or chloro- or dichloroterephthaloyl chloride; provided, only that the other aromatic diamines and aromatic diacid chlorides be present in amounts which do not adversely affect the properties of the para-aramid.

Additives can be used with the para-aramid in the fibers and it has been found that up to as much as 10 percent, by weight, of other polymeric material can be blended with the aramid or that copolymers can be used having as much as 10 percent of other diamine substituted for the diamine of the aramid or as much as 10 percent of other diacid chloride substituted for the diacid chloride of the aramid.

P-aramid fibers are generally spun by extrusion of a solution of the p-aramid through a capillary into a coagulating bath. In the case of poly(p-phenylene terephthalamide), the solvent for the solution is generally concentrated sulfuric acid, the extrusion is generally through an air gap into a cold, aqueous, coagulating bath. Such processes are generally disclosed in U.S. Patent Nos. 3,063,966; 3,767,756; 3,869,429, and 3,869,430. P-aramid fibers are available commercially as Kevlar® fibers, which are available from E. I. du Pont de Nemours and Company, and Twaron® fibers, which are available from Teijin, Ltd.

Other preferred cut resistant fibers useful in this invention are ultra-high molecular weight or extended chain polyethylene fiber generally prepared as discussed in U.S. Patent No. 4,457,985. Such fiber is commercially available under the trade names of Dyneema® available from Toyobo and Spectra® available from Honeywell. Other preferred cut resistant fibers are aramid fibers based on copoly(p-phenylene/3,4'-diphenyl ether terephthalamide) such as those known as Technora® available from Teijin, Ltd. Less preferred but still useful at higher weights are fibers made from polybenzoxazoles such as Zylon® available from Toyobo; anisotropic melt polyester such as Vectran® available from Celanese; polyamides; polyesters; and blends of preferred cut resistant fibers with less cut resistant fibers.

Other cut-resistant fibers include aliphatic polyamide fiber, such as fiber containing nylon polymer or copolymer. Nylons are long chain synthetic polyamides having recurring amide groups (-NH-CO-) as an integral part of the polymer chain, and include nylon 66, which is polyhexamethylenediamine adipamide, and nylon 6, which is polycaprolactam. Other nylons can include nylon 11, which is made from 11-amino-undecanoic acid; and nylon 610, which is made from the condensation product of hexamethylenediamine and sebacic acid.

Other cut-resistant fibers include polyester fiber, such as fiber containing a polymer or copolymer composed of at least 85% by weight of an ester of dihydric alcohol and terephthalic acid. The polymer can be produced by the reaction of ethylene glycol and terephthalic acid or its derivatives. In some embodiments the preferred polyester is polyethylene terephthalate (PET). PET may include a variety of comonomers, including diethylene glycol, cyclohexanedimethanol, poly(ethylene glycol), glutaric acid, azelaic acid, sebacic acid, isophthalic acid, and the like. In addition to these comonomers, branching agents like trimesic acid, pyromellitic acid, trimethylolpropane and trimethyloloethane, and pentaerythritol may be used. PET may be obtained by known polymerization techniques from either terephthalic acid or its lower alkyl esters (e.g. dimethyl terephthalate) and ethylene glycol or blends or mixtures of these. Another potentially useful polyester is polyethylene napthalate (PEN). PEN may be obtained by known polymerization techniques from 2,6 napthalene dicarboxylic acid and ethylene glycol.

### Tires

This invention also relates to tires comprising a non-load bearing cut resistant tire side-wall component; specifically, a tire having a tread area, a first side wall area extending from a first edge of the tread area to a first bead area, and a second side wall area extending from a second edge the tread area to a second bead area, the tire comprising the cut resistant tire side-wall component as described herein in the form of a single layer of textile fabric providing multi-directional cut resistance in the plane of the fabric located in the first sidewall, the fabric not being wrapped around either bead. In some embodiments, the fabric forms a protective envelop for the tire, the fabric being located in the first sidewall area extends from the first bead area to the first edge of the tread area, across the tread area to the second edge of the tread area, and across the second sidewall area to the second bead area, but is not wrapped around either bead.

It is understood that, if desired, there are multiple points during the manufacture of the tire that a cut-resistant tire side-wall component can be incorporated into the tire. For example, radial tires having cut-resistant tire side-wall components can be made in the following manner. The tire assembly is carried out in at least two stages. The first stage building is done on a flat collapsible steel building drum. The tubeless liner is applied, then the body ply which is turned down at the edges of the drum. The steel beads are applied and the liner/ply is turned up. If a protective envelope of the cut-resistant tire side-wall component comprising one layer of an uncured, coated wove or knit fabric is desired, it is incorporated into the tire at this time in the form of an essentially continuous surface from one bead to the other, but not wrapped around either bead. On the other hand, if it is desired for the cut-resistant tire side-wall component to be added as only an insert extending only from the bead to the crown, or from the bead to some portion of the sidewall, one layer of the uncured, coated wove or knit fabric is cut to the proper dimension and added at this point. The chafer and sidewall are combined at the extruder; they are applied together as an assembly. The drum collapses and the tire is ready for second stage.

Second stage building is done on an inflatable bladder mounted on steel rings. The green first stage cover is fitted over the rings and the bladder inflates it, up to a belt guide assembly. The steel belts are applied with their cords crossing at a low angle. The tread rubber is then applied. The tread assembly is rolled to consolidate it to the belts and the green cover is detached from the machine. If desired the tire building process can be automated with each component applied separately along a number of assembly points.

### Process for Making Components

This invention also relates to a process for making a cut resistant tire side-wall component, comprising
a) providing at least a first yarn having cut resistant polymeric fiber and at least a second yarn comprising inorganic fiber;
b) knitting the first and second yarns into a fabric having a free area of from 18 to 65 percent; and
c) applying a coating on the fabric for improved adhesion of the fabric to rubber, while maintaining the free area of the tire side-wall component in the range of from 18 to 65 percent.

Knitted fabrics can be made on a range of different gauge knitting machines. A wide variety of flat-bed and circular knitting machines can be employed. For example, Sheima Seiki knitting machines can be used to make the knitted fabrics. If desired, multiple ends or yarns can be supplied to the knitting machine; that is, a bundle of singles yarns of many different types (for example one or more of staple, continuous, co-spun, or wrapped singles yarns, or a mixture of any of these singles yarns) or a bundle of plied yarns can be co-fed to the knitting machine and knitted into fabrics. In some embodiments it is desirable to add functionality to the fabrics by co-feeding one or more other staple or continuous filament yarns with one or more spun staple yarns having an intimate blend of fibers. The tightness of the knit can be adjusted to meet any specific need. Very effective cut resistance has been found in, for example, single jersey knit, interwoven knit, mesh knit and terry knit patterns.

Generally the coating is applied to the fabric while the fabric is under some degree of tension and then dried for further processing. In many instances, more than one application of coating is needed. One preferred process for applying a coating on the fabric, used with fabrics having a high content of aramid fiber, is a two-step coating process. In the first step, a primer or subcoat of epoxide or mixtures of epoxide and blocked isocyanate is applied on the fabric, followed by drying; this is then followed by a second step of applying a resorcinol-formaldehyde latex (RFL) on the fabric followed by additional drying. If desired, the RFL coating can also contain carbon black.

The coating is applied to the fabric generally by dipping. Preferably the coating substantially or completely coats the yarns in the fabrics without appreciably closing up the open areas in the fabric between yarns. In other words, the coating applied to the fabric is substantial enough to provide adequate adhesion between the fabrics and the tire rubber, while not closing up the fabric to the penetration of that same tire rubber during the manufacture of the tire. The free-area of the fabric can be maintained by adjusting the coating viscosity and loading on the fabric, and in a preferred embodiment this is accomplished such that the free area is not appreciably or substantially changed when coating dries. That is, the difference in the free area of the uncoated fabric and the free area of the fabric having a dried or cured coating is less than 25 percent, and most preferably less than 15 percent. The coating, after drying, is generally cured when the coated fabric is used in the manufacture of the tire.

### Test Methods

Cut Resistance. There are no standardized methods to measure the cut resistance of materials used for tire applications. The closest standard method is ASTM 1790-04, "Standard Test Method for Measuring Cut Resistance of Materials Used in Protective Clothing." The limitation of this method was the inability to simulate the boundary conditions associated with sidewall tension due to internal tire pressure. To develop a new method to test tire laminates, ASTM 1790-04 was used as a basis for developing a test and analysis protocol. In this test the sample is stretched to a specified load, next the sample is pressed against the cutting edge with a plastic mandrel, finally the cutting edge, loaded at a specified force, is drawn one time across the sample until the sample is cut or the blade has moved 3.50 inches (88.9 mm). The cutting edge is a stainless steel knife blade having a sharp edge 3.75 inches (95.25 mm) long. A new cutting edge is used for each test. The sample is a rectangular section of rubber and cord composite 0.25 inch x 5.00 inch (6.35 mm x 127 mm). The mandrel is a made of a hard plastic with two grooves cut into the surface. A horizontal groove keeps the sample from moving with the cutting edge, while a vertical groove allows the cutting edge to penetrate the sample. Cut through is recorded by monitoring the sample tension. When the tension drops to zero the sample has been cut. The degree to which the sample is loaded in tension varies depending on sample construction. To determine the appropriate load, five 0.25 inch x 5.00 inch (6.35 mm x 127 mm) samples are pulled and the load versus strain curve is recorded. The average load to stretch the sample 2.5% is recorded and this load is used to tension the sample in the cut test. A constant strain boundary condition was deemed more appropriate than a constant load condition for non-load bearing members of the tire.

The test is repeated for a minimum of five times at five different mandrel loadings. These data are used to develop a graph with mandrel load on the abscissa and distance the blade traveled to cut the sample on the ordinate. This produces a graph of cut distance as a function of mandrel loading. To compare different composite constructions relative cut performance, the cut distances at a given mandrel loading are averaged together. Then a power function is fit through the average data. The curve can be plotted against similar curves for alternative constructions. Materials requiring more mandrel loading to produce similar cut distances are considered more cut resistant. Materials are compared at the value at a 1 inch (2.54 cm) cut length.

Free Area Determination. A six-inch by six-inch (15.2 x 15.2 cm) square sample of the material to be measured is placed flat on a light table having the intensity of 330 foot candles (3550 lux). If needed, several 12 inch (30.5 cm) long pieces of ¼ inch (6.35 mm) steel bar stock are used to hold down the edges of the sample to prevent bowing and wrinkling. An image of the sample back-lit by the light table is captured using a 6.5 mega-pixel digital SLR camera with a 24mm lens suspended above the table on an extruded aluminum frame. To complete the measurement of free area the captured image is transferred to ADOBE PhotoShop® for processing and analysis.

Once in PhotoShop® the color image is converted to a grayscale image using the Image>Mode-Grayscale function. Next the image is converted to a high contrast black and white image using the Image>Adjustments>Threshold function. A threshold setting of 128 is selected (0=black and 255=white). All pixels lighter than the threshold are converted to white; all pixels darker are converted to black. To further analyze the high contrast image it is necessary to select a representative area of the sample. To do this the rectangular marquee tool is used to highlight a representative section of the sample. The highlighted area is cropped Image>Crop. Finally, the mean intensity of the image is measured using the histogram tool. Since the image was converted to a high intensity black and white image, open areas in the sample have a pixel intensity of 255 and areas with fabric coverage have an intensity of 0. The measure of free area of the sample is obtained by dividing the mean pixel intensity by the intensity of a white pixel (255).

Twist multiplier is the ratio of the turns per inch to the square root of the yarn count. As used herein, the cotton count twist multiplier is the number of turns per inch divided by the square root of the cotton count, and the Tex system twist multiplier is the number of turns per inch multiplied times the square root of the linear density of the yarn in Tex.

### Example 1

Sheath/core singles yarns were made comprising cut-resistant aramid fibers and one end of stainless steel monofilament. The aramid fibers were poly(p-phenylene terephthalamide) fibers sold by E. I. du Pont de Nemours and Company as Merge 1 F1208 Type 970 Royal Blue producer colored staple under the trade name Kevlar® fiber. These fibers have a cut length of about 3.8 centimeters and a linear density of 1.6 dtex per filament. Four steel monofilaments were used ranging from 50 micron diameter (approx. 2 mil) to 150 micron diameter (approx. 6 mil) 304L stainless steel. All monofilament steel samples were manufactured by Bekaert Corporation. The 50 micron diameter steel is sold under the trade name Bekinox® VN 50/1. The 75 micron diameter steel is sold under the trade name Bekinox® VN 75/1. The 100 micron diameter steel is sold under the trade name Bekinox® VN 100/1. The 150 micron diameter steel is sold under the trade name Bekinox® VN 150/1.

The aramid fibers were fed through a standard carding machine used in the processing of short staple spun yarns to make carded sliver. The carded sliver was processed using two pass drawing (breaker/finisher drawing) into drawn sliver and processed on a roving frame to make to make 35 grain (1553 dtex) sliver. Yarn was produced on a DREF III friction spinning process. The aramid slivers and different diameter monofilament steel were fed into the process to produce yarns having a steel core with aramid sheath yarn. Table 1 describes the various yarns produced.

**Table 1**

| **Yarn** | **Steel Diameter (Mils)** | **Steel Diameter (Microns)** | **Steel Linear Density (dtex)** | **Weight Percent Steel** | **Final Yarn Linear Density (dtex)** | **Final Yarn English Cotton Count** |
|---|---|---|---|---|---|---|
| 1-1 | 2 | 50 | 144 | 34 | 421 | 14/1 |
| 1-2 | 3 | 75 | 325 | 36 | 894 | 6.6/1 |
| 1-3 | 4 | 100 | 578 | 45 | 1283 | 4.6/1 |
| 1-4 | 6 | 150 | 1300 | 51 | 2565 | 2.3/1 |
| 1-5 | 2 | 50 | 144 | 6 | 2565 | 2.3/1 |
| 1-6 | 3 | 75 | 325 | 13 | 2565 | 2.3/1 |
| 1-7 | 4 | 100 | 578 | 23 | 2565 | 2.3/1 |

### Example 2

Sheath/core singles yarns were made comprising cut-resistant aramid fibers and one end of fiberglass multi-filament. The aramid fibers were poly(p-phenylene terephthalamide) fibers sold by E. I. du Pont de Nemours and Company as Merge 1 F1208 Type 970 Royal Blue producer colored staple under the trade name Kevlar® fiber. These fibers have a cut length of about 3.8 centimeters and a linear density of 1.6 dtex per filament. 200 denier (222 dtex) multi-filament E glass fiberglass yarn was used.

The aramid fibers were fed through a standard carding machine used in the processing of short staple spun yarns to make carded sliver. The carded sliver was processed using two pass drawing (breaker/finisher drawing) into drawn sliver and processed on a roving frame to make to make 35 grain (1553 dtex) sliver. Yarn was produced on a DREF III friction spinning process. The aramid slivers and one to three ends of 200 denier (220 dtex) fiberglass were fed into the process to produce yarns having a fiberglass core with aramid sheath yarn. Table 2 describes the various yarns produced.

**Table 2**

| **Yarn** | **Number of Ends of 200 Denier Glass** | **Total Glass Linear Density (dtex)** | **Weight Percent Glass** | **Final Yarn Linear Density (dtex)** | **Final Yarn English Cotton Count** |
|---|---|---|---|---|---|
| 2-1 | 1 | 222 | 35 | 634 | 9.3/1 |
| 2-2 | 2 | 444 | 41 | 1073 | 5.5/1 |
| 2-3 | 3 | 667 | 45 | 1475 | 4.0/1 |
| 2-4 | 1 | 222 | 9 | 2565 | 2.3/1 |
| 2-5 | 2 | 444 | 17 | 2565 | 2.3/1 |
| 2-6 | 3 | 667 | 26 | 2565 | 2.3/1 |

### Example 3

Sheath/core singles yarns were prepared as follows and are summarized in Table 3A. A first sheath/core singles yarn 3-1 was made comprising cut-resistant aramid fibers and one end of stainless steel monofilament. The aramid fibers were poly(p-phenylene terephthalamide) fibers sold by E. I. du Pont de Nemours and Company as Merge 1F1208 Type 970 Royal Blue producer-colored staple under the trade name Kevlar® fiber. These fibers have a cut length of about 3.8 centimeters and a linear density of 1.6 dtex per filament. The steel monofilament was a 50 micron diameter (approx. 2 mil) 304L stainless steel sold by Bekaert Corporation under the trade name Bekinox® VN 50/1. The aramid fibers were fed through a standard carding machine used in the processing of short staple spun yarns to make carded sliver. The carded sliver was processed using two pass drawing (breaker/finisher drawing) into drawn sliver and processed on a roving frame to make to make 35 grain (1553 dtex) sliver. Yarn was produced on a DREF III friction spinning process. The aramid slivers and 50 micron diameter steel were fed into the process to produce a 10/1 s cc (590 dtex) yarn having a steel core with aramid sheath yarn.

The previous steps were repeated to form a second sheath/core singles yarn 3-2, however, a stainless steel monofilament having a diameter of 100 microns (4 mils) was used. The yarn was again produced on a DREF III friction spinning process, producing a 2.3/1s cc (2568 dtex) yarn having a steel core with aramid sheath yarn.

The previous steps were repeated to form a third sheath/core singles yarn 3-3; however, a stainless steel monofilament having a diameter of 150 microns (6 mils) was used. The yarn was again produced on a DREF III friction spinning process, producing a 2.3/1s cc (2568 dtex) yarn having a steel core with aramid sheath yarn.

The previous steps were repeated to form a forth sheath/core singles yarn 3-4, however, a fiberglass multi-filament yam having a linear density of 110 dtex was used. The yarn was again produced on a DREF III friction spinning process, producing a 10/1 s cc (590 dtex) yarn having a fiberglass core with aramid sheath yarn.

The previous steps were repeated to form a fifth sheath/core singles yarn 3-5, however, the poly(p-phenylene terephthalamide) fibers were colored black and a stainless steel monofilament having a diameter of 75 microns (3 mils) was used. The yarn was again produced on a DREF III friction spinning process, producing a 7.4/1s cc (800 dtex) yarn having a steel core with aramid sheath yarn.

A sixth 100% staple fiber singles yarn 3-6 was made solely from poly(p-phenylene terephthalamide) fibers sold by E. I. du Pont de Nemours and Company as Merge 1 F849 Type 970 staple under the trade name Kevlar® fiber. These fibers have a cut length of about 4.8 centimeters and a linear density of 1.6 dtex per filament. The staple fibers were fed through a standard carding machine to make carded sliver. The carded sliver was then drawn using two pass drawing (breaker/finisher drawing) into drawn sliver and processed on a roving frame to make 6560 dtex (0.9 hank count) roving. Yarns were then produced by ring-spinning two ends of the roving. 10/1s cotton count (590 dtex) yarns were produced with "Z" twist having a 3.10 cotton count twist multiplier.

A seventh 100% staple fiber singles yarn 3-7 was made solely from poly(p-phenylene terephthalamide) fibers sold by E. I. du Pont de Nemours and Company as Merge 1 F848 Type 970 staple under the trade name Kevlar® fiber. These fibers have a cut length of about 4.8 centimeters and a linear density of 2.5 dtex per filament. The staple fibers were fed through a standard carding machine to make carded sliver. The carded sliver was then drawn using two pass drawing (breaker/finisher drawing) into drawn sliver and processed on a roving frame to make 9840 dtex (0.6 hank count) roving. Yarns were then produced by ring-spinning two ends of the roving. 2.3/1s cotton count (2568 dtex) yarns were produced with "Z" twist having a 3.10 cotton count twist multiplier.

Eight different ply-twisted yarns, having a cotton count twist multiplier of 2.6 were then made from the above seven singles yarns as summarized in Table 3B.

**Table 3A**

| **Yarn** | **Steel Diameter (Microns)** | **Fiberglass Linear Density (dtex)** | **Steel Linear Density (dtex)** | **Weight Percent of Steel or Fiberglass** | **Final Yarn Linear Density (dtex)** | **Final Yarn English Cotton Count** |
|---|---|---|---|---|---|---|
| 3-1 | 50 | - | 144 | 24 | 590 | 10/1 |
| 3-2 | 100 | - | 578 | 23 | 2565 | 2.3/1 |
| 3-3 | 150 | - | 1300 | 51 | 2565 | 2.3/1 |
| 3-4 | - | 110 | - | 19 | 590 | 10/1 |
| 3-5 | 75 | - | 325 | 41 | 797 | 7.4/1 |
| 3-6 | - | - | - | - | 590 | 10/1 |
| 3-7 | - | - | - | - | 2565 | 2.3/1 |

**Table 3B**

| **Ply-Twist Yarn** | **First Singles Yarn** | **Second Singles Yarn** | **Weight Percent Steel** | **Weight Percent Fiberglass** | **Final Yarn Linear Density (dtex)** | **Final Yarn English Cotton Count** |
|---|---|---|---|---|---|---|
| 3-11 | 3-1 | 3-6 | 12 | -- | 1180 | 10/2s |
| 3-12 | 3-1 | 3-1 | 24 | -- | 1180 | 10/2s |
| 3-13 | 3-5 | 3-6 | 20 | -- | 1387 | 8.5/2s |
| 3-14 | 3-2 | 3-7 | 11 | -- | 5130 | 2.3/2s |
| 3-15 | 3-2 | 3-2 | 23 | -- | 5130 | 2.3/2s |
| 3-16 | 3-3 | 3-7 | 25 | -- | 5130 | 2.3/2s |
| 3-17 | 3-3 | 3-3 | 51 | -- | 5130 | 2.3/2s |
| 3-18 | 3-4 | 3-6 | -- | 9 | 1180 | 10/2s |
| 3-19 (Control) | 3-6 | 3-6 | -- | -- | 1180 | 10/2s |

### Example 4

Two styles of knitted fabrics, designated tight (T) and loose (L), were produced from selected singles yarn made in Examples 1 and 2. Tight samples had less free area than the loose samples. Two circular knitting machines were used to knit the yarns shown on Tables 4A and 4B. A 10-gauge 26-inch diameter circular knitting machine was used for lighter fabrics and some tight knits of heavier fabrics. A 3.5-gauge 10-inch diameter circular knitting machine is used for tight and loose styles of the heavier fabrics. Machine's tension settings were changed to obtain the desired tightness of fabric. Tables 4A and 4B summarize the free area and cut resistance for each type of fabric and the construction. Approximately 1 meter samples of each fabric design were made. The tighter fabrics had better cut resistance but had stretched less and had lower area for rubber strike through.

**Table 4A**

| **Fabric** | **Yarn** | **Knit Gauge** | **Weight Percent Steel** | **Weight Percent Glass** | **Weight Percent Aramid** | **Yarn Linear Density (dtex)** | **Fabric Areal Density (g/m²)** | **Fabric Free Area** | **Cut Value 1"** |
|---|---|---|---|---|---|---|---|---|---|
| 4-1 (T) | 1-1 | 10 | 34 | 0 | 66 | 421 | 87 | 37.4% | 1.58 |
| 4-1 (L) | 1-1 | 10 | 34 | 0 | 66 | 421 | 64 | 42.1% | 1.25 |
| 4-2 (T) | 1-2 | 10 | 36 | 0 | 64 | 894 | 160 | 30.1% | 3.30 |
| 4-2 (L) | 1-2 | 10 | 36 | 0 | 64 | 894 | 100 | 48.3% | 1.40 |
| 4-3 (T) | 1-3 | 10 | 45 | 0 | 55 | 1283 | 200 | 33.3% | 4.40 |
| 4-3 (L) | 1-3 | 10 | 45 | 0 | 55 | 1283 | 130 | 64.7% | 3.30 |
| 4-5 (T) | 1-4 | 10 | 51 | 0 | 49 | 2565 | 350 | 28.3% | 5.00 |
| 4-6 (T) | 2-1 | 10 | 0 | 35 | 65 | 634 | 150 | 35.4% | 1.61 |
| 4-6 (L) | 2-1 | 10 | 0 | 35 | 65 | 634 | 120 | 47.8% | 1.25 |
| 4-7 (T) | 2-2 | 10 | 0 | 41 | 59 | 1073 | 200 | 44.3% | 1.61 |
| 4-7 (L) | 2-2 | 10 | 0 | 41 | 59 | 1073 | 180 | 45.5% | 1.53 |
| 4-8 (T) | 2-3 | 10 | 0 | 45 | 55 | 1475 | 270 | 31.2% | 2.15 |
| 4-8 (L) | 2-3 | 10 | 0 | 45 | 55 | 1475 | 240 | 42.1% | 1.60 |

**Table 4B**

| **Fabric** | **Yarn** | **Knit Gauge** | **Weight Percent Steel** | **Weight Percent Glass** | **Weight Percent Aramid** | **Yarn Linear Density (dtex)** | **Fabric Areal Density (g/m²)** | **Fabric Free Area** | **Cut Value 1"** |
|---|---|---|---|---|---|---|---|---|---|
| 4-9 (T) | 1-5 | 3.5 | 6 | 0 | 94 | 2565 | 390 | 18.6% | 2.90 |
| 4-9 (L) | 1-5 | 3.5 | 6 | 0 | 94 | 2565 | 410 | 26.3% | 2.20 |
| 4-10(T) | 1-6 | 3.5 | 13 | 0 | 87 | 2565 | 280 | 31.0% | 2.50 |
| 4-10(L) | 1-6 | 3.5 | 13 | 0 | 87 | 2565 | 210 | 50.9% | 2.30 |
| 4-11 (T) | 1-7 | 3.5 | 23 | 0 | 77 | 2565 | 200 | 41.7% | 3.40 |
| 4-11 (L) | 1-7 | 3.5 | 23 | 0 | 77 | 2565 | 170 | 44.4% | 3.41 |
| 4-12 (L) | 1-4 | 3.5 | 51 | 0 | 49 | 2565 | 250 | 35.4% | 4.60 |
| 4-13(T) | 2-4 | 3.5 | 0 | 9 | 91 | 2565 | 460 | 19.9% | 2.25 |
| 4-13 (L) | 2-4 | 3.5 | 0 | 9 | 91 | 2565 | 390 | 36.8% | 1.50 |
| 4-14 (T) | 2-5 | 3.5 | 0 | 18 | 82 | 2565 | 470 | 35.3% | 2.50 |
| 4-14 (L) | 2-5 | 3.5 | 0 | 18 | 82 | 2565 | 420 | 40.5% | 1.50 |
| 4-15 (T) | 2-6 | 3.5 | 0 | 27 | 73 | 2565 | 540 | 19.2% | 2.80 |
| 4-16 (L) | 2-6 | 3.5 | 0 | 27 | 73 | 2565 | 450 | 28.7% | 2.20 |

### Example 5

The ply twisted yarns from Table 3B were then supplied to a standard 7 gauge Sheima Seiki knitting machine. An attempt was made to make fabric samples by feeding one end of each of the ply-twisted yarns to be knitted; basis weights for the resultant fabrics are described in Table 4. After several initial knitting trials it was discovered that ply-twisted yarns 3-14, 3-15, 3-16, and 3-17 from Table 3B (2.3/2s cc yarns with 4 and 6 mil steel cores) were very difficult to knit, and yarns 3-15 and 3-17 could not be knit at all. Both stiffness and high linear density are believed to have caused these knitting problems. It was also noted that fabrics knit from singles yarns from Tables 3A gave acceptable fabric properties free of twist, torque or other fabric distortions; and cut performance of the fabric was not affected by the use of singles or ply twisted yarns provided the total linear yarn density and concentration of like inorganic core material is equal. All of the fabrics knitted had a free area in the range of 18 to 65%. The cut performance of the item 5-8 was not measured, but is predicted to be in the same range as items 5-1 to 5-3.

**Table 5**

| **Fabric** | **Yarn** | **Weight Percent Steel** | **Weight Percent Glass** | **Weight Percent Aramid** | **Yarn Linear Density (dtex)** | **Fabric Areal Density (g/m²)** | **Cut Value 1"** |
|---|---|---|---|---|---|---|---|
| 5-1 | 3-11 | 12 | 0 | 88 | 1180 | 200 | 1.4 |
| 5-2 | 3-12 | 24 | 0 | 76 | 1180 | 200 | 2.3 |
| 5-3 | 3-13 | 23 | 0 | 77 | 1388 | 240 | 2.3 |
| 5-4 | 3-14 | 11 | 0 | 89 | 5130 | NA | NA |
| 5-5 | 3-15 | 23 | 0 | 77 | 5130 | NA | NA |
| 5-6 | 3-16 | 25 | 0 | 75 | 5130 | NA | NA |
| 5-7 | 3-17 | 51 | 0 | 49 | 5130 | NA | NA |
| 5-8 | 3-18 | 0 | 9 | 90.5 | 1180 | 200 | NA |
| Control | 3-19 | 0 | 0 | 100 | 1180 | 200 | 1.1 |

The fabrics were subjected to the aforementioned cut resistance test and all the fabrics gave better cut resistance compared to the 100% aramid control. Tight fabrics of the same yarn construction have better cut resistance.

### Example 6

Example 5 is repeated using the combination of two singles yarns as disclosed in Table 3B, which is summarized in Table 6; however, the individual singles yarns are not first ply-twisted together to form a ply-twisted yarn. Instead each singles yarn is fed directly to the knitting machine without any prior assembly of any sort. The order in which the strands are fed into the needles of the knitting machine remains the same during the whole knitting process. All of the fabrics knitted had a free area in the range of 18 to 65%.

**Table 6**

| **First Singles Yarn** | **Second Singles Yarn** |
|---|---|
| 3-1 | 3-6 |
| 3-1 | 3-1 |
| 3-5 | 3-6 |
| 3-2 | 3-7 |
| 3-2 | 3-2 |
| 3-3 | 3-7 |
| 3-3 | 3-3 |
| 3-4 | 3-6 |

### Example 7

The fabrics made in Examples 4, 5, and 6 can be coated fabric by a step-wise process. The fabric is dipped first in a primer epoxide solution, the viscosity of the solution having been adjusted to allow for essentially complete coverage of the yarns in the fabric without closing up the free area between the yarns. The primer is then dried on fabric, applying only enough tension to the fabric to prevent the fabric from appreciably shrinking or the free area from collapsing. The fabric is then dipped in a topcoat of resorcinol-formaldehyde latex, and again the viscosity of the latex having been adjusted to allow for essentially complete coverage of the yarns in the fabric without closing up the free area between the yarns. The topcoat is then dried on fabric, applying only enough tension to the fabric to prevent the fabric from appreciably shrinking or the free area from collapsing. When measured, the difference in the free area of the uncoated fabric and the free area of the fabric having a dried coating is less than 25 percent.

### Example 8

Radial tires having tire components containing the singles or ply-twisted sheath/core yarn can be made in the following manner. The tire assembly is carried out in at least two stages. The first stage building is done on a flat collapsible steel building drum. The tubeless liner is applied, then the body ply which is turned down at the edges of the drum. The steel beads are applied and the liner/ply is turned up. At this point, if desired, a knit or woven fabric comprising the ply-twisted sheath/core yarn, or a fabric comprising a cord containing the ply-twisted sheath/core yarn can be incorporated into the tire in the form of a essentially continuous surface from one bead to the other. The chafer and sidewall are combined at the extruder; they are applied together as an assembly. Again, if desired, sidewall inserts can be added at this point, the inserts being made from a knit or woven fabric comprising the ply-twisted sheath/core yarn, or a fabric comprising a cord containing the ply-twisted sheath/core yarn. The drum collapses and the tire is ready for second stage.

Second stage building is done on an inflatable bladder mounted on steel rings. The green first stage cover is fitted over the rings and the bladder inflates it, up to a belt guide assembly. The steel belts are applied with their cords crossing at a low angle. At this point, alternatively, fabrics containing the ply-twisted sheath/core yarn can be incorporated into the tire. The tread rubber is then applied. The tread assembly is rolled to consolidate it to the belts and the green cover is detached from the machine. If desired the tire building process can be automated with each component applied separately along a number of assembly points. It is understood that, if desired, there are multiple points during the manufacture of the tire that a knit or woven fabric comprising the ply-twisted sheath/core yarn or a cord containing the ply-twisted sheath/core yarn can be incorporated into the tire.

## Claims

1. A cut resistant tire side-wall component (6;7;8;9); comprising:
a knitted textile fabric, wherein a single layer of said fabric provides multi-directional cut resistance in the plane of the fabric;
the fabric comprising a first yarn having cut resistant polymeric fiber and a second yarn comprising inorganic fiber; and **characterized in**
the fabric further having a coating for good adhesion of the fabric to rubber such that the cut resistant tire side wall component has a free area of from 18 to 65 percent.

2. The cut resistant tire side-wall component (6;7;8;9) of claim 1, having a free area of from 25 to 65 percent.

3. The cut resistant tire side-wall component (6;7;8;9) of claim 1, having a free area of from 30 to 65 percent.

4. The cut resistant tire side-wall component (6;7;8;9) of claim 1, having a free area of from 40 to 65 percent.

5. The cut resistant tire side-wall component (6;7;8;9) of claim 1, wherein the coating comprises an epoxy resin subcoat and a resorcinol-formaldehyde topcoat.

6. The cut resistant tire side-wall component (6;7;8;9) of claim 1, wherein the linear density of the first or second yarn is from 1200 to 3400 denier (1300 to 3800 dtex).

7. The cut resistant tire side-wall component (6;7;8;9) of claim 1, wherein the fabric basis weight is from 1.9 to 11 ounces per square yard (64 to 373 g/m²).

8. The cut resistant tire side-wall component (6;7;8;9) of claim 1, in the form of an insert located above a bead area (2) in a tire side wall (3).

9. The cut resistant tire side-wall component (6;7;8;9) to claim 1, in the form of an insert extending from a first bead area (2) in a first side wall (3) area to a first edge of a tire tread area (5), across the tire tread area (5) to a second edge of the tire tread area (5), and across a second side wall (3) area to a second bead area (2).

10. A tire (1) having a tread area (5), a first side wall (3) area extending from a first edge of the tread area (5) to a first bead area, and a second side wall (3) area extending from a second edge the tread area to a second bead (2) area the tire (1) comprising the cut resistant tire side-wall component (6;7;8;9) of claim 1 in the form of a fabric insert located in at least the first sidewall (3).

11. The tire (1) of claim 10, wherein the fabric insert located in the first sidewalls (3) area extends from the first bead area (2) to the first edge of the tread area (5), across the tread area (5) to the second edge of the tread area (5), and across the second sidewall (3) area to the second bead area (2).

12. A process for making a cut resistant tire side-wall component (6;7;8;9), comprising:
a) providing a first yarn having cut resistant polymeric fiber and a second yarn comprising inorganic fiber;
b) knitting the first and second yarns into a fabric having a free area of from 18 to 65 percent; and
c) applying a coating on the fabric for improved adhesion of the fabric to rubber while maitaining the free area of the tire side-wall component (6;7;8;9) of from 18 to 65 percent.

13. The process of claim 12, wherein the first yarn having cut resistant polymeric fiber and the second yarn having inorganic fiber are first plied or twisted together prior to knitting.

14. The process of claim 12, wherein the first yarn having cut resistant polymeric fiber and the second yarn having inorganic fiber are knitted by co-feeding the yarns to a knitting machine without substantial twisting of the yarns together prior to the knitting machine.

## Patentansprüche

1. Schnittfeste Reifenseitenwandkomponente (6;7;8;9) umfassend:
einen gewirkten Textilstoff, wobei eine einzige Lage des Textilstoffs multidirektionale Schnittfestigkeit in der Ebene des Textilstoffs verleiht;
der Textilstoff ein erstes Garn, das schnittfeste polymere Faser aufweist und ein zweites Garn umfasst, das anorganische Faser umfasst, umfasst; und **dadurch gekennzeichnet, dass**
der Textilstoff des Weiteren eine Beschichtung zur guten Haftung des Textilstoffs an Kautschuk aufweist, derart, dass die schnittfeste Reifenseitenwandkomponente (6;7;8;9) einen freien Bereich von 18 bis 65 Prozent aufweist.

2. Schnittfeste Reifenseitenwandkomponente (6;7;8;9) nach Anspruch 1, die einen freien Bereich von 25 bis 65 Prozent aufweist.

3. Schnittfeste Reifenseitenwandkomponente (6;7;8;9) nach Anspruch 1, die einen freien Bereich von 30 bis 65 Prozent aufweist.

4. Schnittfeste Reifenseitenwandkomponente (6;7;8;9) nach Anspruch 1, die einen freien Bereich von 40 bis 65 Prozent aufweist.

5. Schnittfeste Reifenseitenwandkomponente (6;7;8;9) nach Anspruch 1, wobei die Beschichtung eine Epoxidharz-Basisschicht und eine Resorcin-Formaldehyd-Deckschicht umfasst.

6. Schnittfeste Reifenseitenwandkomponente (6;7;8;9) nach Anspruch 1, wobei die lineare Dichte des ersten oder zweiten Garns 1200 bis 3400 Denier (1300 bis 3800 dtex) beträgt.

7. Schnittfeste Reifenseitenwandkomponente (6;7;8;9) nach Anspruch 1, wobei das Flächengewicht des Textilstoffs 1,9 bis 11 Unzen pro Quadratyard (64 bis 373 g/m²) beträgt.

8. Schnittfeste Reifenseitenwandkomponente (6;7;8;9) nach Anspruch 1 in Form einer Einlage, die sich über einem Wulstbereich (2) in einer Reifenseitenwand (3) befindet.

9. Schnittfeste Reifenseitenwandkomponente (6;7;8;9) nach Anspruch 1 in Form einer Einlage, die sich von einem ersten Wulstbereich (2) in einem ersten Seitenwandbereich (3) bis zu einer ersten Kante einer Reifenlauffläche (5) über den gesamten Reifenlaufflächenbereich (5) bis zu einer zweiten Kante des Reifenlaufflächenbereichs (5) und über einen zweiten Seitenwandbereich (3) bis zu einem zweiten Wulstbereich (2) erstreckt.

10. Reifen (1), der einen Laufflächenbereich (5), einen ersten Seitenwandbereich (3), der sich von einer ersten Kante des Laufflächenbereichs (5) bis zu einem ersten Wulstbereich (2) erstreckt, und einen zweiten Seitenwandbereich (3), der sich von einer zweiten Kante des Laufflächenbereichs (5) bis zu einem zweiten Wulstbereich (2) erstreckt, aufweist, wobei der Reifen (1) eine schnittfeste Reifenseitenwandkomponente (6;7;8;9) nach Anspruch 1 in Form einer Textilstoffeinlage umfasst, die sich in mindestens der ersten Seitenwand (3) befindet.

11. Reifen (1) nach Anspruch 10, wobei die Textilstoffeinlage, die sich in dem ersten Seitenwandbereich (3) befindet, sich von dem ersten Wulstbereich (2) bis zur ersten Kante des Laufflächenbereichs (5), über den Laufflächenbereich (5) bis zur zweiten Kante des Laufflächenbereichs (5) und über den zweiten Seitenwandbereich (3) bis zum zweiten Wulstbereich (2) erstreckt.

12. Verfahren zur Herstellung einer schnittfeste Reifenseitenwandkomponente (6;7;8;9) umfassend:
a) das Bereitstellen eines ersten Garns, das schnittfeste polymere Faser aufweist, und eines zweiten Garns, das anorganische Faser umfasst;
b) das Wirken der ersten und zweiten Garne zu einem Textilstoff, der einen freien Bereich von 18 bis 65 Prozent aufweist; und
c) das Aufbringen einer Beschichtung auf den Textilstoff zur verbesserten Haftung des Textilstoffs an Kautschuk, während der freie Bereich der Seitenwandkomponente (6;7;8;9) bei 18 bis 65 Prozent gehalten wird.

13. Verfahren nach Anspruch 12, wobei das erste Garn, das schnittfeste polymere Faser aufweist, und das zweite Garn, das anorganische Faser aufweist, vor dem Wirken zuerst zusammengedreht oder -gezwirnt werden.

14. Verfahren nach Anspruch 12, wobei das erste Garn, das schnittfeste polymere Faser aufweist, und das zweite Garn, das anorganische Faser aufweist, durch gleichzeitiges Zuführen der Garne zu einer Strickmaschine ohne Wesentliches Zusammenzwirnen der Garne vor der Strickmaschine gewirkt werden.

## Revendications

1. Composant résistant aux coupures pour flanc de pneumatique (6; 7; 8; 9); comprenant:
un tissu textile tricoté, dans lequel une couche unique dudit tissu fournit une résistance multidirectionnelle aux coupures dans le plan du tissu;
le tissu comprenant un premier fil ayant une fibre polymère résistante aux coupures et un second fil comprenant une fibre inorganique; et **caractérisé en ce que**
le tissu présente en outre un revêtement pour une bonne adhésion du tissu au caoutchouc de sorte que le composant résistant aux coupures pour flanc de pneumatique (6; 7; 8; 9) ait une surface libre de 18 à 65 pourcent.

2. Composant résistant aux coupures pour flanc de pneumatique (6; 7; 8; 9) selon la revendication 1, ayant une surface libre de 25 à 65 pourcent.

3. Composant résistant aux coupures pour flanc de pneumatique (6; 7; 8; 9) selon la revendication 1, ayant une surface libre de 30 à 65 pourcent.

4. Composant résistant aux coupures pour flanc de pneumatique (6; 7; 8; 9) selon la revendication 1, ayant une surface libre de 40 à 65 pourcent.

5. Composant résistant aux coupures pour flanc de pneumatique (6; 7; 8; 9) selon la revendication 1, dans lequel le revêtement comprend une sous-couche de résine époxy et une couche de finition de résorcinol-formaldéhyde.

6. Composant résistant aux coupures pour flanc de pneumatique (6; 7; 8; 9) selon la revendication 1, dans lequel la densité linéaire du premier ou du second fil est de 1 200 à 3 400 deniers (1 300 à 3 800 dtex).

7. Composant résistant aux coupures pour flanc de pneumatique (6; 7; 8; 9) selon la revendication 1, dans lequel le poids de base du tissu est de 1,9 à 11 onces par yard carré (64 à 373 g/m²).

8. Composant résistant aux coupures pour flanc de pneumatique (6; 7; 8; 9) selon la revendication 1, se présentant sous la forme d'un insert localisé au-dessus d'une surface de talon (2) dans un flanc de pneumatique (3).

9. Composant résistant aux coupures pour flanc de pneumatique (6; 7; 8; 9) selon la revendication 1, se présentant sous la forme d'un insert se prolongeant d'une première surface de talon (2) dans une première surface de flanc (3) jusqu'à un premier bord d'une surface de bande de roulement de pneumatique (5), à travers la surface de la bande de roulement de pneumatique (5) vers un second bord de la surface de bande de roulement de pneumatique (5), et à travers une seconde surface de flanc (3) jusqu'à une seconde surface de talon (2).

10. Pneumatique (1) ayant une surface de bande de roulement (5), une première surface de flanc (3) se prolongeant d'un premier bord de la surface de bande de roulement (5) vers une première surface de talon (2), et une seconde surface de flanc (3) se prolongeant d'un second bord de la surface de bande de roulement (5) vers une seconde surface de talon (2), le pneumatique (1) comprenant le composant résistant aux coupures pour flanc de pneumatique (6; 7; 8; 9) selon la revendication 1 se présentant sous la forme d'un insert en tissu localisé au moins à l'intérieur du premier flanc (3).

11. Pneumatique (1) selon la revendication 10, dans lequel l'insert en tissu localisé dans la première surface de flanc (3) se prolonge depuis la première surface de talon (2) vers le premier bord de la surface de bande de roulement (5), à travers la surface de bande roulement (5) vers le second bord de la surface de bande de roulement (5), et à travers la seconde surface de flanc (3) vers la seconde surface de talon (2).

12. Procédé de fabrication d'un composant résistant aux coupures pour flanc de pneumatique (6; 7; 8; 9) comprenant:
a) la fourniture d'un premier fil ayant une fibre polymère résistante aux coupures et un second fil comprenant une fibre inorganique;
b) le tricotage du premier et du second fil en un tissu ayant une surface libre de 18 à 65 pourcent; et
c) l'application d'un revêtement sur le tissu pour une adhésion améliorée du tissu au caoutchouc, tout en maintenant la surface libre du composant de flanc de pneumatique (6; 7; 8; 9) de 18 à 65 pourcent.

13. Procédé selon la revendication 12, dans lequel le premier fil ayant une fibre polymère résistante aux coupures et le second fil ayant une fibre inorganique sont premièrement câblés ou torsadés ensemble avant le tricotage.

14. Procédé selon la revendication 12, dans lequel le premier fil ayant une fibre polymère résistante aux coupures et le second fil ayant une fibre inorganique sont tricotés par co-alimentation des fils au niveau d'une machine de tricotage sans torsadage substantiel conjoint des fils avant la machine de tricotage.
